# EUROPÄISCHE PATENTANMELDUNG

(11) **EP 3 300 216 A1**
(43) Veröffentlichungstag der Anmeldung: **28.03.2018**
(21) Anmeldenummer: 16189916.6
(22) Anmeldetag: 21.09.2016
(51) Int. Cl.: H02K 3/24, H02K 1/26

(54) **ANORDNUNG ZUR KÜHLUNG EINER DYNAMOELEKTRISCHEN MASCHINE**

(71) Anmelder: Siemens Aktiengesellschaft, 80333 München (DE)
(72) Erfinder: Kowalski, Matthias, 45478 Mülheim an der Ruhr (DE); Lehmann, Christoph, 47506 Neukirchen-Vluyn (DE)

(57) **Zusammenfassung**

Die Erfindung betrifft eine Anordnung zur Kühlung einer dynamoelektrischen Maschine, wobei im Nutgrundkanal ein Inlay angeordnet wird, das dazu führt, dass der Druck im Bereich des Inalys vergrößert wird, so dass ein Luftstrom von der Oberfläche des Rotors zum Nutgrundkanal erfolgt, und dadurch eine bessere Kühlung im Bereich des Inlays führt.

## Beschreibung

Die Erfindung betrifft eine Anordnung zur Kühlung einer dynamoelektrischen Maschine.

Dynamoelektrische Maschinen wie beispielsweise Turbogeneratoren weisen im Wesentlichen einen um eine Rotationsachse drehbar gelagerten Rotor auf, der eine Rotorwicklung umfasst sowie einen um den Rotor angeordneten Stator, der eine Statorwicklung umfasst. Im Betrieb strömt ein Gleichstrom durch die Rotorwicklung, was zu einem magnetischen Feld führt. Die Ströme durch die Rotorwicklung sind bei den heutigen Turbogeneratoren vergleichsweise hoch, was zur Erzeugung von Wärme führt und somit zu einer Erhöhung der Rotorwicklungstemperatur führt. In der Regel existiert ein Temperaturgrenzwert, der im Betrieb nicht überschritten werden sollte. Damit dieser Grenzwert nicht überschritten wird, wird der Rotor aktiv gekühlt. Hierzu wird unter der Rotorwicklung ein Kanal ausgebildet, durch den ein Kühlmedium strömen kann. Durch das Auftreten von in radialer Richtung wirkenden Kräften aufgrund der Rotation des Rotors erfolgt eine Förderwirkung, so dass das Kühlmedium aus diesem Nutgrundkanal durch radiale Schlitze in der Rotorwicklung nach außen zu einem Luftspalt hin austreten kann. Somit kann das Kühlmedium unmittelbar entlang der Rotorwicklung geführt werden und somit die Verlustwärme abtransportieren.

Allerdings wird der Kühlmediumstrom in Richtung Ballenmitte geringer, was zwangsläufig zu einer Verlangsamung der Kühlmediumströmung im Nutgrundkanal führt. Dies führt dazu, dass die Strömungsgeschwindigkeiten des Kühlmediums am Eintritt des Nutgrundkanals vergleichsweise hoch sind. Allerdings führen hohe Geschwindigkeiten am Anfang des Nutgrundkanals zu einem hohen dynamischen Druck und dadurch zu einem niedrigen statischen Druck. Mit einem geringen statischen Druck in diesem Bereich des Nutgrundkanals ist die Druckdifferenz zwischen dem Luftspalt und dem Nutgrundkanal zu gering um einen genügend starken Kühlmediumstrom zu erzeugen. Die Folge ist, dass vor allem der erste Radialschlitz in der Rotorwicklung mit einem vergleichsweise geringeren Massenstrom mit Kühlmedium versorgt wird und dementsprechend auch der Bereich des Rotorkupfers unterhalb des Schrumpfsitzes, wo keine Kühlschlitze angeordnet werden können, schlecht gekühlt wird. Andererseits sollte besonders der erste Radialschlitz der Rotorwicklung gut gekühlt werden, da der angrenzende Bereich unterhalb des Schrumpfsitzes der Läuferkappe auch durch diesen gekühlt werden soll. Da die Grenztemperatur die Leistung des gesamten Generators limitiert, ist es wünschenswert vor allem den ersten Kühlschlitz besser mit Kühlmedium zu versorgen.

Der erste radiale Kühlschlitz ist in der Nähe der Rotorstirn angeordnet und unterhalb des Kappenrings ausgebildet. Die Auslassbohrung im Keil ist geschrägt, so dass das Kühlmedium in den Luftspalt austreten könnte. Dennoch wird eine gute Kühlung verhindert, da die Strömungsgeschwindigkeiten sehr hoch sind, was auf den kleinen statischen Druck im Nutgrundkanal zurückzuführen ist.

Aufgabe der Erfindung ist es eine verbesserte Anordnung zur Kühlung einer dynamoelektrischen Maschine anzugeben.

Gelöst wird diese Aufgabe durch eine Anordnung zur Kühlung einer elektrodynamischen Maschine gemäß Anspruch 1.

Vorteilhafte Weiterbildungen sind in den Unteransprüchen angegeben.

Ein Aspekt der Erfindung ist es, dass mit Hilfe eines Werkzeuges das Inlay direkt in dem Nutgrundkanal fixiert werden kann, wobei mögliche Arten der Fixierung beispielsweise das Kleben, das Stecken oder Verklemmen ist.

Die oben beschriebenen Eigenschaften und Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Gleiche Bauteile oder Bauteile mit gleicher Funktion sind dabei mit gleichen Bezugszeichen gekennzeichnet.

Ausführungsbeispiele der Erfindung werden nachfolgend anhand der Zeichnungen beschrieben. Diese soll die Ausführungsbeispiele nicht maßgebliche darstellen, vielmehr ist die Zeichnung, wo zur Erläuterung dienlich, in schematisierter und/oder leicht verzerrter Form ausgeführt. Im Hinblick auf Ergänzungen der in der Zeichnung unmittelbar erkennbaren Lehren wird auf den einschlägigen Stand der Technik verwiesen.

Es zeigen:
- Figur 1: eine schematische Darstellung eines Teils des Rotors,
- Figur 2: eine stirnseitige Ansicht des Rotors,
- Figur 3: eine Querschnittsansicht eines Teils der Rotorwicklung,
- Figur 4: eine schematische Darstellung der Strömungsverhältnisse,
- Figur 5: eine weitere schematische Darstellung der Strömungsverhältnisse,
- Figur 6: eine weitere schematische Darstellung der Strömungsverhältnisse,

- Figur 7: eine perspektivische Ansicht des Nutgrundkanals,
- Figur 8: eine perspektivische Ansicht eines Inlays,

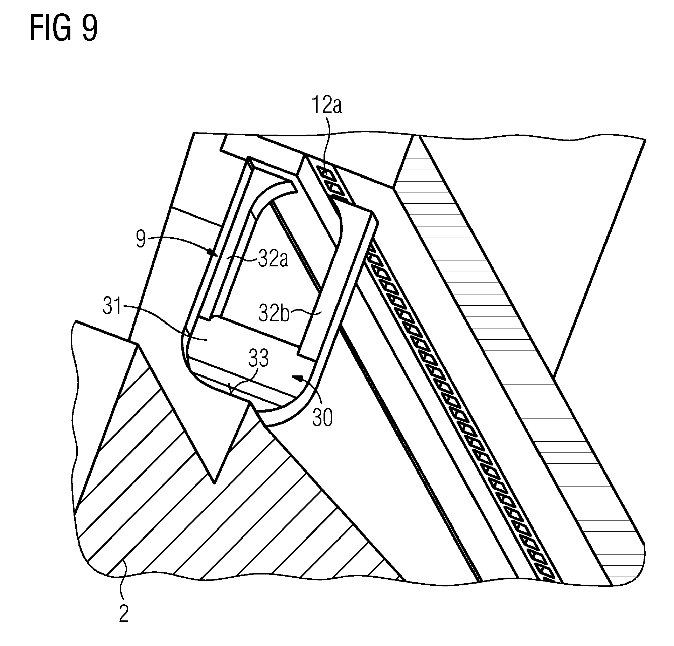

- Figur 9: eine weitere perspektivische Ansicht des Nutgrundkanals.

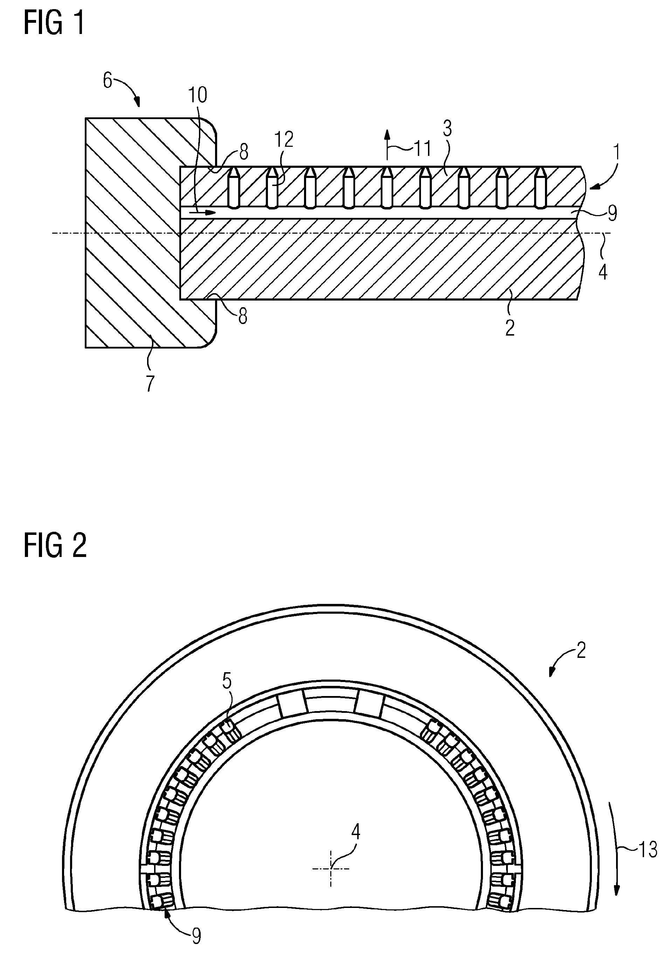

Die Figur 1 zeigt eine Ansicht eines Teils einer Rotorwicklung 1, die in einem Rotor 2 einer dynamoelektrischen Maschine, wie beispielsweise einem Turbogenerator angeordnet ist. Die Rotorwicklung 1 umfasst einen Leiterstab 3, der in einer Rotationsachsenrichtung 4 länglich ausgebildet ist und in Nuten 5 eingebracht wird. An einem stirnseitigen Ende 6 ist eine Läuferkappe 7 angeordnet, die über einen Schrumpfsitz 8 mit dem Rotor 2 fest verbunden ist. Die Kühlung der Rotorwicklung 1 erfolgt folgendermaßen: über einen Nutgrundkanal 9 strömt ein Kühlmedium von dem stirnseitigen Ende 6 in Richtung Rotormitte (nicht dargestellt). Die Strömungsrichtung 10 des Kühlmediums erfolgt hierbei von links nach rechts. Das Kühlmedium kann beispielsweise Luft, Stickstoff oder Wasserstoff sein. Desweiteren weist die Rotorwicklung 1 in radialer Richtung 11 angeordnete Kühlleitungen 12 auf. Aus Gründen der Übersichtlichkeit ist in der Figur 1 lediglich eine Kühlleitung mit dem Bezugszeichen 12 versehen. Die Kühlleitung 12 ist gemäß Figur 1 als eine erste Kühlleitung ausgebildet und somit eine Kühlleitung, die gegenüber dem Stand der Technik verbessert gekühlt werden sollte. Die Rotorwicklung 1 ist charakterisiert durch eine erste Kühlleitung 12a, an der die Strömungsverhältnisse gegenüber den weiteren Kühlleitungen unterschiedlich sind.

Die Figur 2 zeigt einen Teil des Rotors 2. In einer Umfangsrichtung 13 sind mehrere Nutgrundkanäle 9 ausgebildet. Durch diese Nutgrundkanäle 9 strömt im Betrieb ein Kühlmedium. Aus Gründen der Übersichtlichkeit ist lediglich ein Nutgrundkanal mit dem Bezugszeichen 9 versehen. Desweiteren ist aus Gründen der Übersichtlichkeit nur eine Nut mit dem Bezugszeichen 5 versehen.

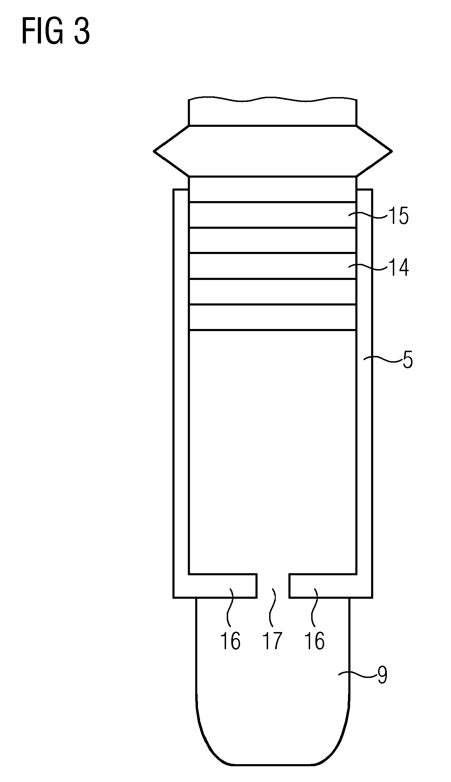

Die Figur 3 zeigt eine vergrößerte Ansicht eines Teils des Rotors 3. In der Nut 5 ist ein Leiter 14, der einen Teil der Rotorwicklung 1 darstellt, angeordnet. Der Leiter 14 umfasst übereinander angeordnete Kupferstäbe 15. Aus Gründen der Übersichtlichkeit ist lediglich ein Kupferstab mit dem Bezugszeichen 15 versehen und außerdem sind nicht alle Kupferstäbe dargestellt. Die Nut 5 wird durch Nutverschlusskeile 16 begrenzt, die am unteren Ende 19 eine Grenze darstellen zu dem Nutgrundkanal 9. Zwischen den Nutverschlusskeilen 16 sind Kühlschlitze 17 angeordnet, die die Möglichkeit schaffen eine strömungstechnische Verbindung zwischen dem Nutgrundkanal 9 und einer radialen Kühlleitung in der Rotorwicklung (in Figur 3 nicht dargestellt) zu ermöglichen.

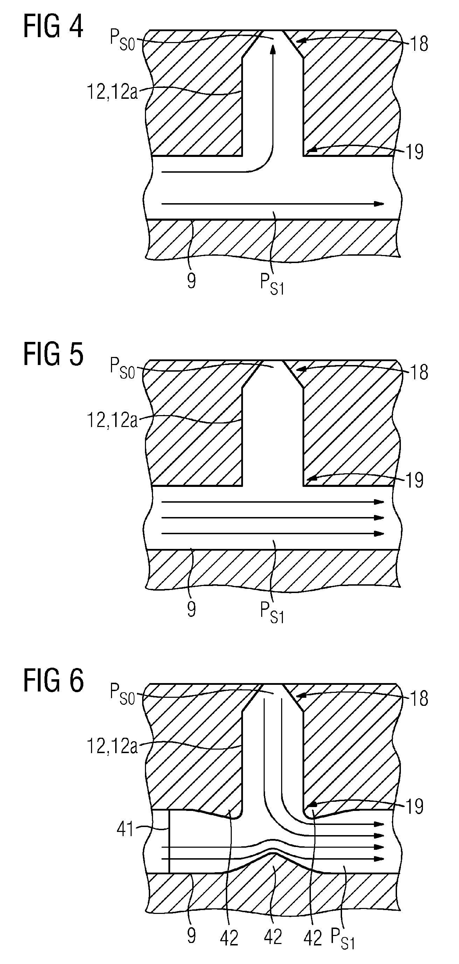

Die Figuren 4, 5 und 6 stellen eine schematische Ansicht dar, um die Druck- und Strömungsverhältnisse zwischen dem Nutgrundkanal 9 und der Kühlleitung 12 bzw. 12a darzustellen. Am oberen Ende 18 der Kühlleitung 12 bzw. 12a herrscht der Druck Pₛ₀. Am unteren Ende 19 herrscht der Druck Pₛ₁. Eine gute Kühlwirkung wird erreicht, wie in Figur 4 zu sehen ist, wenn der Druck Pₛ₀ kleiner ist als der Druck Pₛ₁ am unteren Ende 19 (P_{S0} < P_{S1}). Eine Darstellung einer vergleichsweise schlechteren Kühlung ist in der Figur 5 zu sehen, bei der die Druckverhältnisse folgendermaßen aussehen: dort ist der Druck P_{S0} im Wesentlichen gleich dem Druck Pₛ₁ (P_{S0} ≈ P_{S1}). • Gut zu erkennen ist gemäß der Figur 5, dass die Strömung so gut wie gar nicht an das obere Ende 18 gelangt.

Figur 6 zeigt die Strömungsverhältnisse, wenn der Nutgrundkanalquerschnitt 41 im Bereich der ersten Kühlleitung 12a verjüngt wird. Dadurch erfolgt eine Strömung vom oberen Ende 18 an das untere Ende 19. Dadurch erfolgt eine verbesserte Kühlung im Bereich der ersten Kühlleitung.

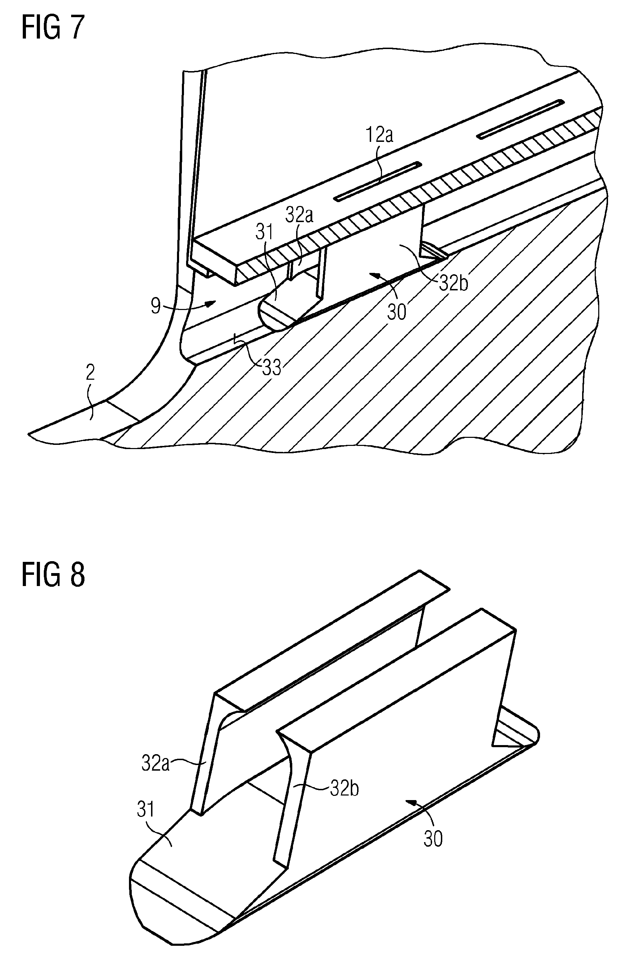

Die Figur 7 zeigt eine perspektivische Ansicht der Erfindung. Das Inlay 30 ist im Nutgrundkanal 9 angeordnet und zwar im Bereich der ersten Kühlleitung 12a. Die erste Kühlleitung 12a wird durch den Kühlschlitz symbolisiert.

Die Figur 8 zeigt eine perspektivische Ansicht des Inlays 30. Das Inlay 30 umfasst einen Grundkörper 31, an den zwei Stegen 32a, 32b angeordnet sind. Das Inlay 30 wird auf eine Nutgrundkanalfläche 33 im Nutgrundkanal 9 angeordnet. Dies geschieht über ein Werkzeug (nicht dargestellt). Das Werkzeug verfügt über ein Ende zum temporären Festhalten des Inlays. Das Inlay wird beispielsweise mit dem Nutgrundkanal 9 verklebt, oder eingesteckt oder verklemmt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Anordnung zur Kühlung einer dynamoelektrischen Maschine, wobei die Anordnung einen um eine Rotationsachse drehbar gelagerten Rotor (2) mit einer Rotorwicklung (1) umfasst, wobei die Rotorwicklung (1) entlang der Rotationsachse (4) angeordnete Leiterstäbe (3) umfasst,
wobei der Rotor (2) Nuten (5) aufweist, in die die Leiterstäbe (3) angeordnet sind,
wobei die Nut (5) derart ausgebildet ist, dass zwischen dem Leiterstab (3) und der Nut (5) in radialer Richtung (11) gesehen ein Nutgrundkanal (9) ausgebildet ist,
wobei die Rotorwicklung (1) Kühlleitungen (12) aufweisen, die im Wesentlichen in radialer Richtung (11) angeordnet sind,
wobei die Nut (5) Nutseitenwinkel aufweisen, die eine untere Begrenzung der Nut (5) darstellen, wobei zwischen den Nutseitenwinkeln ein Kühlschlitz (17) ausgebildet ist, wobei der Nutgrundkanal (9) durch die Nutseitenwinkel in radialer Richtung (11) begrenzt,
**dadurch gekennzeichnet, dass**
vor dem Kühlschlitz (17) der Nutgrundkanal (9) ein erster Nutgrundkanalquerschnitt (41) und im Bereich des Kühlschlitzes (17) einen zweier Nutgrundkanalquerschnitt (41) aufweist,
wobei der zweite Nutgrundkanalquerschnitt (41) kleiner ist als der erste.

2. Anordnung nach Anspruch 1,
wobei nach dem Kühlschlitz (17) der Nutgrundkanals (9) einen dritten Nutgrundkanalquerschnitt (41) aufweist, wobei der dritte Nutgrundkanalquerschnitt (41) größer ist als der zweite Nutgrundkanalquerschnitt (41).

3. Abordnung nach Anspruch 1 oder 2,
wobei die Verjüngung des Nutgrundkanalquerschnitts (41) durch ein im Nutgrundkanal (9) anbringbares Inlay (30) erfolgt.

4. Anordnung nach einem der vorhergehenden Ansprüche,
wobei der Inlay (30) einen an der Nutgrundfläche (33) anliegenden Grundkörper (31) und zwei seitlich Inlay-Stege (32a, 32b) aufweist, die vom Grundkörper (31) bis zu den Seitenwinkeln ragen.

5. Verfahren zur Herstellung einer Anordnung nach einem der vorhergehenden Ansprüche,
wobei das Inlay (30) mittels eines Werkzeugs in den Nutgrundkanal (9) eingeschoben wird.
